# EUROPEAN PATENT SPECIFICATION

(11) **EP 1 254 023 B1**
(45) Date of publication and mention of the grant of the patent: **02.08.2006**
(21) Application number: 00980518.5
(22) Date of filing: 20.11.2000
(51) Int. Cl.: B32B 13/12

(54) **PREFABRICATED DURABLE BUILDING MATERIAL**
VORGEFERTIGTES DAUERHAFTES BAUMATERIAL
MATERIAU DE CONSTRUCTION DURABLE ET PREFABRIQUE

(30) Priority: 19.11.1999 US 166513 P
(43) Date of publication of application: 06.11.2002
(73) Proprietor: James Hardie International Finance B.V., 1077 ZX Amsterdam (NL)
(72) Inventor: PENG, Weiling, Murrieta, CA 92562 (US); GLEESON, James, A., Upland, CA 91786 (US); MERKLEY, Donald, J., Alta Loma, CA 91733 (US)
(74) Representative: Mallalieu, Catherine Louise
(86) International application number: PCT/US2000/031729
(87) International publication number: WO 2001/036191

(56) References cited:
- GB-A- 2 078 611
- US-A- 5 425 986

## Description

### Background of the Invention

### Field of the Invention

This invention relates to building materials, and more particularly, to a building material comprising a fiber cement substrate, a polymer film and one or a plurality of resin impregnated sheets that is both pre-finished and durable.

### Description of the Related Art

Fiber cement in recent years has become popular for use as a building material instead of more conventional materials such as wood, metal and plastics. Fiber cement has better water resistance than wood and is more resistant to rotting, cracking or splitting than wood. Also, fiber cement does not rust like metal, and is more durable to weathering than plastics. For instance, fiber cement products such as James Hardie Building Products' HARDIPLANK® install just as easily as wood siding, but offer a lifetime of low maintenance. Fiber cement siding is a durable, attractive alternative to traditional wood composite, cedar, vinyl, brick or stucco sidings.

Despite these advantages, fiber cement may not always have the desired exterior look and feel for a particular application. Moreover, conventional fiber cement materials are often painted or subject to other types of post-production or on-site finishing to give the material its desired appearance and exterior protection. However, exposure of paint to natural weathering and other factors can lead to chalking of the surface and loss of polymer in the paint film. Paint surfaces are also very thin, generally on the order of one to two mils (0.025 - 0.5 mm), and because of that are subject to chipping, peeling and scratching from surface abuse.

Laminates comprised of a core having a sheet laminate comprised of a plurality of resin impregnated paper sheets adhered to the core are known in the art. Known core materials include engineered wood panels such as MDF (medium density fiber board) and particle boards. These products may perform satisfactorily in dry areas, but in areas subject to moisture these products have a tendency to swell, which misaligns the edges of the structure.

U.S. Patent No. 5,425,986 discloses a laminate structure comprising a core of fiber cementboard laminated to resin impregnated sheets. The differential dimensional movement of the core and the laminate through various environmental conditions can lead to induced stresses between the fiber cement and resin impregnated sheets which often leads to splitting of the core or delamination. This is exaggerated by environments which experience high moisture followed by periods of dryness or heat and low humidity.

Accordingly, what is needed is a building material incorporating the durability and moisture resistance of fiber cement while also having a desired exterior look and feel. In addition, what is needed is a building material having an exterior surface that is pre-finished and durable to scratch and wear, while also maintaining strong adhesion to the fiber cement, and does not split, crack or delaminate when exposed to severe environmental conditions or wet/dry cycling.

According to one aspect of the present invention there is provided a building material, comprising:
a fiber cement substrate having a first side and a second side;
at least one resin impregnated paper over at least one of said first and second sides; and
an elastomeric film between said fiber cement substrate and said at least one resin impregnated paper, said elastomeric film acting acting as a stress relaxer between said fiber cement substrate and said at least one resin impregnated paper.

According to another aspect of the present invention there is provided use of a film comprising an elastomeric polymer adapted to balance stresses between a fiber cement substrate and a resin impregnated paper for joining the fiber cement substrate to the resin impregnated paper.

According to a further aspect of the present invention there is provided a method for bonding a fiber cement substrate having a surface to at least one resin impregnated paper to form a building material, the method comprising:
coating at least a portion of the surface of the fiber cement substrate with an elastomeric film, the elastomeric film being capable of preventing delamination between the substrate and the at least one resin impregnated paper; and
pressing at least one resin impregnated paper against the elastomeric film and the substrate.

### Brief Description of the Drawings

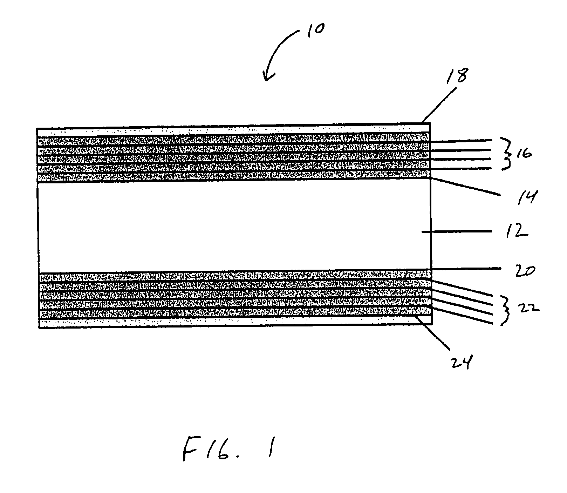

Figure 1 is a cross-sectional view of a building material incorporating a fiber cement core having a plurality of resin impregnated papers laminated thereto according to one embodiment of the invention.

### Detailed Description of the Preferred Embodiments

The preferred embodiments of the present invention relate to a pre-finished, moisture resistant and durable building material, preferably comprising laminating fiber cement to one or a plurality of resin penetrated papers or sheets such as FORMICA®. In one embodiment, a pre-finished and durable building material is provided. In another embodiment, an elastomeric coating or film is provided between resin penetrated sheets and a substrate. In another embodiment, a process for bonding the resin penetrated sheets to the substrate is provided.

The pre-finished building material combines three components (1) a substrate, (2) an elastomeric film or coating, and (3) resin penetrated papers. These components formed together provide a building construction material that is both pre-finished and durable. The resin penetrated papers may be provided on either one side of the substrate or both sides.

The substrate is fiber cement. In one embodiment, the fiber cement substrate is about 20% to 60% Portland cement, about 20% to 70% ground silica sand, about 0% to 12% cellulose fiber, and about 0% to 6% select additives such as mineral oxides, mineral hydroxides and water. Platelet or fibrous additives, such as, for example, woolastonitc, mica, glass fiber or mineral fiber, may be added to improve the thermal stability of the fiber cement. The dry density fiber cemem sheet is typically about 1.3 to 1.4 g/cm³ but can be modificd by pressing the material to dry densities up to 2.0 g/cm³ or by addition of density modifiers such as unexpanded or expanded vermiculite, perlite, clay, shale or low bulk density (about 0.06 to 0.7 g/cm³) calcium silicate hydrates or aeration

The elastomeric film is preferably polyurethane, acrylic, acrylic-styrene, polyester, polyether, polyvinyl and their modified films. The film may be an individual film with or without an adhesive on its surface, or may be a film formed from water based solution, solvent based solution or 100% solid polymers. In one embodiment, the thickness of the film is from about 0.2 mil to 5 mil (0.005 to 0.125 mm).

The elastomeric film is preferably flexible, with a glass transition temperature T₉ preferably between about 90°C and 50°C, more preferably below 0°C, with good strength. The elastomeric film advantageously has good adhesion to both fiber cement and resin penetrated sheets such as FORMICA®. Alternatively, when a separate adhesive is placed on one or both sides of the polymeric film, this adhesive should have good adhesion to the fiber cement and/or resin penetrated sheet.

The cellulose paper is preferably penetrated with resin of melamine-formaldehyde and phenol-formaldehyde, and may also be treated by other polymer resins, such as polyester. The thickness of the penetrated paper in one embodiment is from about 0.05 mm to 1 mm. The amount of resin in the paper is preferably from about 10% to 70%.

The process is preferably to laminate the resin penetrated papers, the elastomeric film and the substrate together all at the same time (direct method). Another process that may be used laminates the resin penetrated papers first, and then laminates this sheet of laminated papers, the elastomeric film and the substrate together (indirect method).

This invention relates in one embodiment to laminating resin impregnated papers such as FORMICA® to a fiber cement core. Lamination may occur at different pressures, and may be accomplished by direct and indirect lamination as discussed above. The invention also relates to the product of FORMICA® or similar materials laminated to fiber cement

One problem experienced with laminating resin impregnated papers to fiber cement without a specially selected elastomeric film is that the laminate suffers from delamination. For instance, after melamine-formaldehyde (MF) and phenol-formaldehyde (PF) impregnated papers are pressed in a pressure machine, the resin will cure and the lamination will have a much larger dimensional movement than the fiber cement panel under heat and moisture. Because of the differential movement, the lamination of resin impregnated paper to fiber cement will delaminate under dry conditions, high humidity or with heating up as the forces on the material tear the lamination apart.

The preferred embodiments of the present invention overcome this problem by developing a method to treat the surface of fiber cement by using an elastomeric coating or film to successfully stop the delamination on FORMICA® laminated fiber cement whether the product is made from direct or indirect lamination. The elastomeric coating is preferably a non-rigid, stress-relieving material that acts as a stress relaxer to relieve the stress between the fiber cement and the resin impregnated sheets. Laminates incorporating this coating are less susceptible to delamination and/or splitting or cracking.

Optionally, the fiber cement substrate may be pressed flat in the green state or sanded after curing to obtain a smooth surface on which a minimal number (e.g., 1 or 2) of resin impregnated papers may be bonded incorporating a coating, as described above. By machining or sanding the surface smooth prior to coating, this enables a fewer number of resin impregnated papers to be used to obtain the desired flat finish. Such product has the differential stresses between the fiber cement and the resin impregnated papers more adequately balanced to resist cracking or splitting of the core.

FIGURE 1 illustrates one embodiment of a building material constructed in accordance with the present invention. This building material 10 includes a substrate 12, which in one embodiment is a fiber cement panel, the panel 12 having a first side and a second side. On the first side of the panel 12, a first layer of elastomeric adhesive 14 is provided, such as described above. A plurality of resin impregnated papers 16 is preferably provided over the elastomeric adhesive 14. In the embodiment shown, four layers 16 of phenol-formaldehyde impregnated papers are provided. Over the layers 16 a layer of melamine-formaldehyde penetrated paper 18 is preferably provided.

On the second side of the panel 12, a second layer of elastomeric adhesive 20 is provided. As with the first side, in one embodiment a plurality of resin impregnated papers 22, more preferably four layers of phenol-formaldehyde impregnated papers, are provided over the second layer of elastomeric adhesive 20. A layer of melamine-formaldehyde penetrated paper 24 is preferably provided over the layers 22.

The elastomeric material used for the adhesives 14, 20 preferably can be stretched and pressed without damaging the elastomeric material under Gmited force. Tha elastomeric material preferably yecovers to its original shape after relieving of the force. In one embodiment, the elastomeric material used has an elongation between about 20% and 1200%, more preferamy between about 100% to 1000%. The modulus of elasticity of the material at 100% elongation is preferably between about 10 to 10,000 psi (0.07 to 69 MPa), more preferably about 50 to 8,000 psi (0.35 to 55 MPa).

It will be appreciated that the embodiment shown in FIGURE 1 is purety examprifyirig, and thus, other types of resin impregnated papers in varying quantities may bo provided. Thus, in one embodiment, resin impregnated papers may be provided only to one side of the panel 12. In addition, each side may preferably have a fewer number or larger number of phenol-formaldehyde penetrated papers, for example. 0 to 4. In the embodiment above, it will also be appreciated that additional layers of melamiriL-f-orm'atdehyde penetrated papers may be provided, for example 1 to 3.

Further examples of a building material 10 similar to that shown in FIGURE 1 are described below.

### Example 1

One example of a building material using a direct lamination method according to this invention is herein described. A fiber cement panel having a thickness of ¼" (6 mm) is roller-coated with Bayhydrol PR 240 (40% of solid) on both sides of the panel. Bayhydrol 240 PR is a water-based polyurethane elastomeric adhesive available from Bayer Corp. of Pittsburgh. PA. One layer of melamine-formaldehyde (MF) resin impregnated paper and four layers of phenolformaldehyde (PF) impregnated papers are put on top of the coated fiber cement panel, and one layer of MF impregnated paper and one layer of PF impregnated paper is out on the bottom of the coated fiber cement. The layers and the panel together are pressed at 350°F (177°C) for 5 min at pressure of 750 psi (5 MPa). The laminated panel is then placed in an oven at 60°C for 3 days.

The resulting building material showed no delamination. A building material fabricated in accordance with the embodiments described above was subjected to three types of delamination tests:
1. The building material was placed in a room temperature desiccate (humidity less than 10%) for 2 days.
2. The building material was placed in a dry oven at 60°C for 3 days.
3. The building material was subjected to 5 dry/wet cycles, such as 24 hours in an oven at 60°C and 24 hours soaked in water.

It has been found that when no polymer film is placed between the fiber cement and FORMICA°, delamination occurs in about 2 hours in an oven at about 60°C. With the film, no delamination occurred under the above-described three tests.

### Example 2

Another example uses an indirect lamination method for laminating decorative paper to fiber cement. The phenol-formaldehyde impregnated papers and melamine-formaldehyde impregnated papers were pressed in hot press with high pressure (for example, about 1500 psi (10 MPa)) or with medium pressure (for example, about 1000 psi (60.7 MPa)) to get paper based decorative laminates. The thickness of the paper based laminate may vary from about 0.5 mm to 3 mm.

A fiber cement sheet having a thickness of about ¼ (6 mm) was coated with WC-0682-M-449 adhesive (H.B. Fuller, St. Paul. Minnesota) by using a brush. WC-0682-M-449 is a water based acrylic elastomeric adhesive. The solid percentage of the adhesive was about 48%. The amount of glue on fiber cement was about 7 g/ft² (wet based weight, i.e. 7 g of 48% adhesive) for each side. A thickness of about 0.5 mm of paper based laminate was put on both sides of the coated fiber cement. The paper based laminates and fiber cement core were pressed at about 50 psi (0.34 MPa) for about 1 min. The temperatures of top platen and bottom platen in the press were about 350°F (177°C).

The laminated panel was then placed in different environment conditions for testing adhesion and delamination. The laminated panel showed excellent adhesion and had no delamination. As a comparison, instead of using an elastomeric adhesive, urea-formaldehyde adhesive, such as described in U.S. Patent No. 5,425,986, was used to make the same laminates. Delamination occurred at the fiber cement core when the laminate was dried in oven of 60°C for about 2 hours.

In general, the preferred embodiments of the present invention enable a building material to take advantage of the durability and other properties of fiber cement while pre-finishing the material by laminating the fiber cement to resin impregnated sheets such as FORMICA" or similar material. The pre-finished surface eliminates the need for painting, either at the building construction site or paint priming and/or paint finishing coating in the factory. FORMICA' and similar materials have the advantage over common interior and exterior house paints (such as acrylic paints) of being more durable to surface scratch and wear. Moreover, the elastomeric polymer film between the fiber cement and the FORMICA" or similar material relieves stresses therebetween and prevents delamination of the building material.

The embodiments illustrated and described above are provided merely as examples of certain preferred embodiments of the present invention. Various changes and modifications can be made from the embodiments presented herein by those skilled in the art without departure from the scope of the invention.

## Claims

1. A building material, comprising:
a fiber cement substrate having a first side and a second side;
at least one resin impregnated paper over at least one of said first and second sides; and
an elastomeric film between said fiber cement substrate and said at least one resin impregnated paper, said elastomeric film acting acting as a stress relaxer between said fiber cement substrate and said at least one resin impregnated paper.

2. The building material of Claim 1, wherein the fiber cement substrate comprises cellulose fibers.

3. The building material of Claim 1, wherein the elastomeric film has an elongation between about 20% and 1200%.

4. The building material of Claim 3, wherein the elastomeric film has an elongation between about 100% and 1000%.

5. The building material of Claim 1, wherein the elastomeric film has a modulus of elasticity at 100% elongation of between about 10 and 10,000 psi (0.07 and 69 MPa).

6. The building material of Claim 5, wherein the elastomeric film has a modulus of elasticity at 100% elongation of between about 50 and 8,000 psi (0.35 and 55 MPa).

7. The building material of Claim 1, wherein the elastomeric film has a glass transition temperature between about -90 and 50°C.

8. The building material of Claim 1, further comprising an adhesive on a surface of the elastomeric film.

9. The building material of Claim 1, wherein the resin impregnated paper includes a cellulose paper penetrated with resin selected from the group consisting of melamine-formaldehyde and phenol-formaldehyde.

10. The building material of Claim 1, wherein a resin impregnated paper is laminated to both said first and second sides.

11. The building material of Claim 1, comprising at least one layer of phenol-formaldehyde penetrated paper over the first side of the fiber cement substrate, and at least one layer of melamine-formaldehyde penetrated paper over the at least one layer of phenol-formaldehyde penetrated paper.

12. Use of a film comprising an elastomeric polymer adapted to balance stresses between a fiber cement substrate and a resin impregnated paper for joining the fiber cement substrate to the resin impregnated paper.

13. The use of Claim 12, wherein the polymer is a water based polyurethane elastomeric adhesive.

14. The use of Claim 12, wherein the polymer is a water based acrylic elastomeric adhesive.

15. A method for bonding a fiber cement substrate having a surface to at least one resin impregnated paper to form a building material, the method comprising:
coating at least a portion of the surface of the fiber cement substrate with an elastomeric film, the elastomeric film being capable of preventing delamination between the substrate and the at least one resin impregnated paper; and
pressing at least one resin impregnated paper against the elastomeric film and the substrate.

16. The method of Claim 15, wherein the fiber cement has a thickness of about 0.25 inches (6 mm).

17. The method of Claim 15, wherein the at least one resin impregnated paper includes a plurality of resin impregnated papers.

18. The method of Claim 17, further comprising forming a pre-cured resin impregnated paper laminate by pressing the plurality of papers together in a separate process from and prior to pressing the pre-cured resin impregnated paper laminate against the elastomeric film and the substrate.

19. The method of Claim 18, wherein the pre-cured resin impregnated paper laminate has a thickness of between about 0.5 mm to 3 nun.

20. The method of Claim 18, wherein pressing the plurality of papers together takes place at about 350°F (177°C) for about 1 minute at a pressure of about 50 psi (0.35 MPa).

21. The method of Claim 15, wherein pressing occurs at about 350°F (177°C) for about 5 minutes at a pressure of about 750 psi (5 MPa).

22. The method of Claim 15, further comprising smoothening the surface of fiber cement prior to coating.

## Patentansprüche

1. Baumaterial, welches folgendes umfaßt:
ein Faserzementsubstrat mit einer ersten Seite und einer zweiten Seite,
wenigstens ein harzimprägniertes Papier auf zumindest entweder der ersten oder der zweiten Seite und
einen Elastomerfilm zwischen dem Faserzementsubstrat und dem wenigstens einen harzimprägnierten Papier, wobei der Elastomerfilm als ein Spannungsausgleicher zwischen dem Faserzementsubstrat und dem wenigstens einen harzimprägnierten Papier wirkt.

2. Baumaterial nach Anspruch 1, wobei das Faserzementsubstrat Zellulosefasem umfaßt.

3. Baumaterial nach Anspruch 1, wobei der Elastomerfilm eine Ausdehnung von zwischen etwa 20% und 1200% hat.

4. Baumaterial nach Anspruch 3, wobei der Elastomerfilm eine Ausdehnung von zwischen etwa 100% und 1000% hat.

5. Baumaterial nach Anspruch 1, wobei der Elastomerfilm ein Elastizitätsmodul bei 100% Ausdehnung von zwischen etwa 10 und 10.000 psi (0,07 und 69 MPa) hat.

6. Baumaterial nach Anspruch 5, wobei der Elastomerfilm ein Elastizitätsmodul bei 100% Ausdehnung von zwischen etwa 50 und 8.000 psi (0,35 und 55 MPa) hat.

7. Baumaterial nach Anspruch 1, wobei der Elastomerfilm eine Glasübergangstemperatur zwischen etwa -90 und 50°C hat.

8. Baumaterial nach Anspruch 1, welches weiterhin ein Klebemittel auf einer Oberfläche des Elastomerfilms umfaßt.

9. Baumaterial nach Anspruch 1, wobei das harzimprägnierte Papier ein Zellulosepapier umfaßt, welches mit Harz, ausgewählt aus der Gruppe, bestehend aus Melamin-Formaldehyd und Phenol-Formaldehyd, durchdrungen ist.

10. Baumaterial nach Anspruch 1, wobei ein harzimprägniertes Papier auf sowohl die erste als auch die zweite Seite auflaminiert ist.

11. Baumaterial nach Anspruch 1, welches wenigstens eine Schicht von mit Phenol-Formaldehyd durchdrungenem Papier auf der ersten Seite des Faserzementsubstrats und wenigstens eine Schicht von mit Melamin-Formaldehyd durchdrungenem Papier auf der wenigstens einen Schicht von mit Phenol-Formaldehyd durchdrungenem Papier umfaßt.

12. Verwendung eines Films, welcher ein elastomeres Polymer umfaßt, das so ausgestaltet ist, daß es Spannungen zwischen einem Faserzementsubstrat und einem harzimprägnierten Papier ausgleicht, zum Verbinden des Faserzementsubstrates mit dem harzimprägnierten Papier.

13. Verwendung nach Anspruch 12, wobei das Polymer ein elastomeres Klebemittel aus Polyurethan auf Wasserbasis ist.

14. Verwendung nach Anspruch 12, wobei das Polymer ein elastomeres Klebemittel aus Acryl auf Wasserbasis ist.

15. Verfahren zum Verbinden eines Faserzementsubstrats, das eine Oberfläche hat, mit wenigstens einem harzimprägnierten Papier unter Bildung eines Baumaterials, wobei das Verfahren folgendes umfaßt:
das Beschichten wenigstens eines Teils der Oberfläche des Faserzementsubstrats mit einem Elastomerfilm, wobei der Elastomerfilm in der Lage ist, eine Ablösung zwischen dem Substrat und dem wenigstens einen harzimprägnierten Papier zu verhindern, und
das Pressen des wenigstens einen harzimprägnierten Papiers an den Elastomerfilm und das Substrat.

16. Verfahren nach Anspruch 15, wobei der Faserzement eine Dicke von etwa 0,25 Zoll (6 mm) hat.

17. Verfahren nach Anspruch 15, wobei das wenigstens eine harzimprägnierte Papier eine Mehrzahl von harzimprägnierten Papieren beinhaltet.

18. Verfahren nach Anspruch 17, welches weiterhin das Bilden eines mit vorgehärtetem Harz imprägnierten Papierlaminats durch Zusammenpressen der Mehrzahl von Papieren in einem separaten Vorgang zu und vor dem Pressen des mit vorgehärtetem Harz imprägnierten Papierlaminats an den Elastomerfilm und das Substrat umfaßt.

19. Verfahren nach Anspruch 18, wobei das mit vorgehärtetem Harz imprägnierte Papierlaminat eine Dicke von zwischen etwa 0,5 mm und 3 mm hat.

20. Verfahren nach Anspruch 18, wobei das Zusammenpressen der Mehrzahl von Papieren bei etwa 350°F (177°C) für etwa 1 Minute bei einem Druck von etwa 50 psi (0,35 MPa) stattfindet.

21. Verfahren nach Anspruch 15, wobei das Pressen bei etwa 350°F (177°C) für etwa 5 Minuten bei einem Druck von etwa 750 psi (5 MPa) stattfindet.

22. Verfahren nach Anspruch 15, welches weiterhin das Glätten der Oberfläche des Faserzements vor dem Beschichten umfaßt.

## Revendications

1. Matériau de construction comprenant :
un substrat de fibres-ciment ayant une première face et une seconde face ;
au moins un papier imprégné de résine sur au moins l'une desdites première et seconde faces ; et
un film élastomère entre ledit substrat de fibres-ciment et ledit au moins un papier imprégné de résine, ledit film élastomère agissant comme relaxateur de contraintes entre ledit substrat de fibres-ciment et ledit au moins un papier imprégné de résine.

2. Matériau de construction selon la revendication 1, dans lequel le substrat de fibres-ciment comprend des fibres de cellulose.

3. Matériau de construction selon la revendication 1, dans lequel le film élastomère a un allongement compris entre environ 20 % et 1200 %.

4. Matériau de construction selon la revendication 3, dans lequel le film élastomère a un allongement compris entre environ 100 % et 1000 %.

5. Matériau de construction selon la revendication 1, dans lequel le film élastomère a un module d'élasticité à 100 % d'allongement compris entre environ 10 et 10 000 psi (0,07 et 69 MPa).

6. Matériau de construction selon la revendication 5, dans lequel le film élastomère a un module d'élasticité à 100 % d'allongement compris entre environ 50 et 8000 psi (0,35 et 55 MPa).

7. Matériau de construction selon la revendication 1, dans lequel le film élastomère a une température de transition vitreuse comprise entre environ -90 et 50°C.

8. Matériau de construction selon la revendication 1, comprenant de plus un adhésif sur une surface du film élastomère.

9. Matériau de construction selon la revendication 1, dans lequel le papier imprégné de résine comprend un papier de cellulose imprégné d'une résine choisie dans le groupe formé par une résine mélamine-formaldéhyde et une résine phénol-formaldéhyde.

10. Matériau de construction selon la revendication 1, dans lequel un papier imprégné de résine est stratifié aux deux dites première et seconde faces.

11. Matériau de construction selon la revendication 1, comprenant au moins une couche de papier imprégné de phénol-formaldéhyde sur la première face du substrat de fibres-ciment, et au moins une couche de papier imprégné de mélamine-formaldéhyde sur ladite au moins une couche de papier imprégné de phénol-formaldéhyde.

12. Utilisation d'un film comprenant un polymère élastomère convenant pour équilibrer les contraintes entre un substrat de fibres-ciment et un papier imprégné de résine pour joindre le substrat de fibres-ciment au papier imprégné de résine.

13. Utilisation selon la revendication 12, dans laquelle le polymère est un adhésif élastomère de polyuréthanne à base aqueuse.

14. Utilisation selon la revendication 12, dans laquelle le polymère est un adhésif élastomère acrylique à base aqueuse.

15. Procédé pour lier un substrat de fibres-ciment ayant une surface à au moins un papier imprégné de résine pour former un matériau de construction, le procédé comprenant les étapes consistant à :
revêtir au moins une partie de la surface du substrat de fibres-ciment avec un film élastomère, le film élastomère étant capable d'empêcher une déstratification entre le substrat et ledit au moins un papier imprégné de résine ; et
presser ledit au moins un papier imprégné de résine contre le film élastomère et le substrat.

16. Procédé selon la revendication 15, dans lequel le substrat de fibres-ciment a une épaisseur d'environ 0,25 inch (6 mm).

17. Procédé selon la revendication 15, dans lequel ledit au moins un papier imprégné de résine comprend plusieurs papiers imprégnés de résine.

18. Procédé selon la revendication 17, consistant de plus à former un stratifié de papier imprégné de résine prédurci par pressage des différents papiers ensemble dans une opération séparée et préalable au pressage du stratifié de papier imprégné de résine prédurci contre le film élastomère et le substrat.

19. Procédé selon la revendication 18, dans lequel le stratifié de papier imprégné de résine prédurci a une épaisseur comprise entre environ 0,5 mm et 3 mm.

20. Procédé selon la revendication 18, dans lequel le pressage des différents papiers ensemble a lieu à environ 350°F (177°C) pendant environ 1 minute à une pression d'environ 50 psi (0,35 MPa).

21. Procédé selon la revendication 15, dans lequel le pressage a lieu à environ 350°F (177°C) pendant environ 5 minutes à une pression d'environ 750 psi (5 MPa).

22. Procédé selon la revendication 15, consistant de plus à lisser la surface du substrat de fibres-ciment avant de la revêtir.
